# EUROPEAN PATENT SPECIFICATION

(11) **EP 2 636 810 B1**
(45) Date of publication and mention of the grant of the patent: **30.03.2016**
(21) Application number: 11838198.7
(22) Date of filing: 31.10.2011
(51) Int. Cl.: E04C 5/16

(54) **REINFORCEMENT BAR COUPLER**
BEWEHRUNGSSTABKOPPLER
COUPLEUR DE BARRES DE RENFORT

(30) Priority: 26.01.2011 KR 20110007910; 04.11.2010 KR 20100109388
(43) Date of publication of application: 11.09.2013
(73) Proprietor: Roc Co., Ltd., Gwangju 506-251 (KR)
(72) Inventor: KIM, Byung Sub, Gwangju 450-070 (KR); HONG, Man Ki, Gwangju 500-160 (KR)
(74) Representative: Beck & Rössig European Patent Attorneys
(86) International application number: PCT/KR2011/008203
(87) International publication number: WO 2012/060593

(56) References cited:
- JP-A- H08 319 696
- JP-A- 2003 184 222
- JP-A- 2003 239 458
- JP-A- 2004 300 836
- JP-A- 2009 138 408
- JP-A- 2009 287 234
- KR-A- 980 002 284
- KR-A- 20050 095 968
- KR-A- 20080 031 540
- KR-A- 20100 090 330
- KR-A- 20100 108 633

## Description

### [Technical Field]

The present invention relates to a reinforcement bar coupler comprising the features of the preamble portion of claim 1.

### [Background Art]

In general, a reinforcement bar is used a manner in which it is buried inside concrete when constructing a steel-reinforced concrete structure in order to reinforce the strength of the concrete structure. In particular, a large number of reinforcement bars are used for reinforcement in large buildings, special structures, and engineering work structures such as bridges.

However, since reinforcement bars are manufactured to be standardized regular lengths, it is required to connect those reinforcement bars that are manufactured at limited lengths to each other when using such reinforcement bars in large buildings, special structures, and engineering work structures such as bridges.

Typically, methods that have been used up to now to couple reinforcement bars include lap jointing, welding, screw-machining, mechanical jointing and the like.

Lap jointing is a method of coupling reinforcement bars by overlapping the reinforcement bars at a predetermined length and tying them with a wire or a steel wire. A large portion of the reinforcement bars are lost, and the reinforcement bars are easily detached due to the weak strength of jointed portions. Also, a working time is increased due to poor constructability, which is problematic. The welding has problems in that construction is difficult and the strength of the portions of the reinforcement bars adjacent to the welded portions is remarkably weakened because of the heat generated when the welded portions are heated.

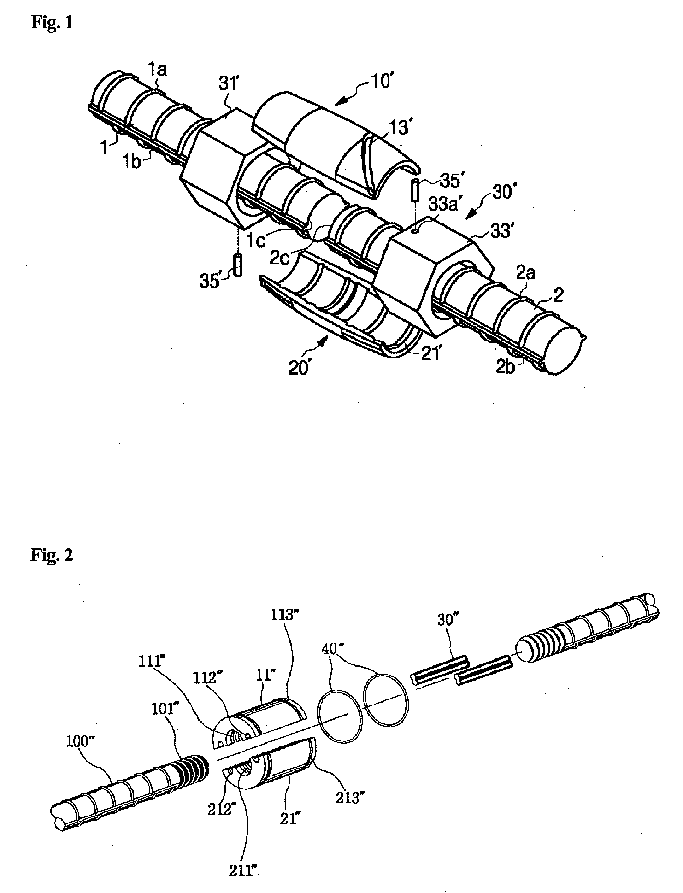

In order to overcome the foregoing problems, a mechanical coupling technology was developed. As an example, a reinforcement bar coupling device is disclosed in Korean Laid-Open Patent Publication No. 10-2009-0009578 (published January 23, 2009). Referring to this device, as shown in FIG. 1, a pair of reinforcement bars 1 and 2 which have joint protrusions 1a and 2a at predetermined intervals on the outer circumference thereof and rib protrusions 1b and 2b in the longitudinal direction are disposed such that they face each other. The ends 1c and 2c of the reinforcement bars 1 and 2 which face each other are wrapped in first and second couplers 10' and 20'. Both ends of the first and second couplers 10' and 20' are clamped via screw clamping using clamping nuts 31' and 33'. Afterwards, fastening pins 35' are fitted into fastening holes 31a' and 33a' of the clamping nuts 31' and 33'.

However, in the foregoing technologies, when the reinforcement bars are connected to each other at work sites, a great deal of manual labor of craftsmen is required, i.e. the first and second couplers 10' and 20' are butted against each other, the clamping nuts 31' and 33' are clamped, and the fastening pins 35' are fitted. Accordingly, a long time and a large cost are spent on construction.

In addition, Korean Patent No. 10-0837113 (published June 13,2008) was disclosed as another mechanical coupling method of the related art. As shown in FIG. 2, one end of each reinforcement bar 100" is machined into the shape of a wedge, thereby forming a connecting portion 101". The connecting portions 101" of a pair of reinforcement bars 100" are connected and fixed to each other using a pair of coupler members 11" and 21", a pair of coupler connecting pins 30", a pair of rubber bands 40" and the like.

However, this approach of the related art has a significant drawback in that ends of the reinforcement bars 100", which are manufactured at standardized sizes, must be machined before use in order to form the connecting portions 101". In addition, the coupler members 11" and 21", the coupler connecting pins 30", the rubber bands 40" and the like must be individually and manually fastened to the reinforcement bars 100", thereby leading to the problems of increased construction time and cost.

A reinforcement bar coupler according to the preamble portion of claim 1 is known from JP 2003 239458 A. This coupler is provided with a female thread that is to be screwed onto a male thread formed on a reinforcement bar. A spiral wire is arranged between the threads.

Further reinforcement bar couplers are known from JP 2009 287234 A, JP 2003 184222 A and JP 2009 138408 A.

### [Disclosure]

### [Technical Problem]

Accordingly, the present invention has been made keeping in mind the above problems occurring in the related art and aims at providing a technical alternative.

### [Technical Solution]

This technical problem is solved by a reinforcement bar coupler comprising the features of claim 1. Advantageous embodiments are indicated in further claims.

In an aspect, the present invention provides a reinforcement bar coupler with which a reinforcement bar is connected and fixed. The reinforcement bar coupler includes a hollow coupler cap having an open outer end through which the reinforcement bar is to be inserted into the coupler cap; a spiral female thread circumferentially recessed on an inner surface of the coupler cap, the female thread having an inclined taper plane which is inclined and protrudes from a recessed bottom in a direction toward the outer end; and a clamping spring having a spiral shape that corresponds to the female thread, the clamping spring being made of a material that can be twisted and changed in diameter under an external force and be elastically restored, and being fitted into and fastened to the female thread. When the reinforcement bar is inserted, the clamping spring is closely abutted to the recessed bottom of the female thread and is unwound so that a diameter thereof is increased so that the reinforcement bar slips. When an external force in a direction opposite to a direction in which the reinforcement bar is inserted is applied in a state in which the reinforcement bar is inserted, the clamping spring moves in the direction toward the outer end of the coupler cap along the inclined taper plane due to a frictional force exerted onto the reinforcement bar and is wound on the reinforcement bar so that the diameter thereof is gradually decreased, thereby holding the reinforcement bar.

In one embodiment of the reinforcement bar coupler according to the present invention the female thread may include a base spring fitted into the coupler cap. The base spring is spirally wound so as to have an outer diameter corresponding to an inner diameter of the coupler cap, and has bottoms which are formed on an inner surface of the base spring, are spirally wound, and are spirally recessed in a circumferential direction at positions where adjacent joints meet, and inclined taper planes which are inclined and protrude from the recessed bottoms in a direction toward the outer end. The reinforcement bar coupler further includes an anti-dislodgement unit having a reinforcement bar passage hole in a central portion thereof, the reinforcement bar passage hole having a predetermined diameter through which the reinforcement bar can pass. The anti-dislodgement unit is fastened to the outer end of the coupler cap in order to prevent the base spring from being dislodged in the direction toward the outer end of the coupler cap in a state in which the base spring is fitted into the coupler cap.

In another embodiment of the reinforcement bar coupler the base spring has a rounded portion which is roundly machined along each corner of upper edges of the joints such that, when the clamping spring is moved in the direction toward the outer end of the coupler cap along the inclined taper plane, an upper edge of each of the joints overlaps an inner portion of a lower edge of an adjacent joint and an inner diameter of the base spring is decreased under an external force.

In another embodiment of the reinforcement bar coupler the clamping spring has clamping taper planes, which correspond to the inclined taper planes such that the clamping spring is slidable and movable along the inclined taper plane, and an angled corner portion, a part of which thrusts into the reinforcement bar when the diameter of the clamping spring is decreased.

In another embodiment the reinforcement bar coupler further includes a one-touch connecting means which prevents the clamping spring from interfering with insertion of the reinforcement bar while the reinforcement bar is being inserted into the coupler cap, and causes the clamping spring to hold the reinforcement bar when the insertion of the reinforcement bar into the coupler cap is completed. The one-touch connecting means includes a hook portion provided adjacent to the outer end of the coupler cap. The hook portion supporting one end of the clamping spring, a support plate provided inside the coupler cap, and a leaf spring supported by the support plate, the leaf spring having a protrusion protruding from the support plate between the hook portion and the leaf spring such that the other end of the clamping spring is supported in a state in which the clamping spring is twisted in a direction in which the diameter there is increased. When the reinforcement bar is inserted into the coupler cap and presses against the protrusion, the protrusion is recessed due to elasticity and no longer supports the other end of the clamping spring, so that the diameter of the clamping spring is restored due to elasticity.

### [Advantageous Effects]

According to the reinforcement bar coupler of the present invention having the above-described configurations, it is possible to easily connect and couple reinforcement bars with one touch based on a change in the diameter of the clamping springs caused by twisting using a relatively simple configuration. Since the bottom and the inclined taper plane are formed without machining the female thread, it is easy to machine and manufacture the reinforcement bar coupler. Since the cross-section of the clamping spring has a triangular shape, the reinforcement bar can be more securely fixed based on the sliding movement of the clamping spring and the thrust of the angled end portions into the reinforcement bar. Since the one-touch connecting means allows the clamping spring to be fitted into and fastened to the base spring in the state in which the clamping spring is twisted in the direction in which its diameter is increased and the diameter of the clamping spring to be restored when the insertion of the reinforcement bar is completed, the reinforcement bars can be properly coupled to each other irrespective the difference even if there is a difference in the diameter between reinforcement bars due to characteristics of the manufacturing process of the reinforcement bars.

### [Description of Drawings]

FIG. 1 is an exploded perspective view showing a reinforcement bar coupler of the related art;
FIG. 2 is an exploded perspective view showing another reinforcement bar coupler of the related art;
FIG. 3 are example views showing the states in which reinforcement bar couplers according to the present invention are used;
FIG. 4 is an exploded perspective view showing a reinforcement bar coupler according to a first embodiment of the present invention;
FIG. 5 is a perspective view showing a part of the reinforcement bar coupler according to the first embodiment of the present invention which is partially cut away;
FIG. 6 is an exploded perspective view showing a reinforcement bar coupler according to a second embodiment of the present invention;
FIG. 7 is a perspective view showing a part of the reinforcement bar coupler according to the second embodiment of the present invention which is partially cut away; and
FIG. 8 to FIG. 10 are side cross-sectional views showing the state in which the reinforcement bar coupler according to the second embodiment of the present invention is used.

### <Major Reference Numerals and Symbols of the Drawings>

1 reinforcement bar
1a: joint protrusion
1b: rib protrusion
10: coupler cap
20: female thread
20a: base spring
21: bottom
22: inclined taper plane
23: rounded portion
30: clamping spring
31: clamping taper plane
32: corner portion
40: anti-dislodgement unit
41: reinforcement bar passage hole
50: one-touch connecting means
51: hook portion
52: support plate
53: leaf spring
531: protrusion
532: guide portion
533: coupling bolt

### [Mode for Invention]

Reference will now be made in detail to a reinforcement bar coupler according to the present invention, embodiments of which are illustrated in the accompanying drawings.

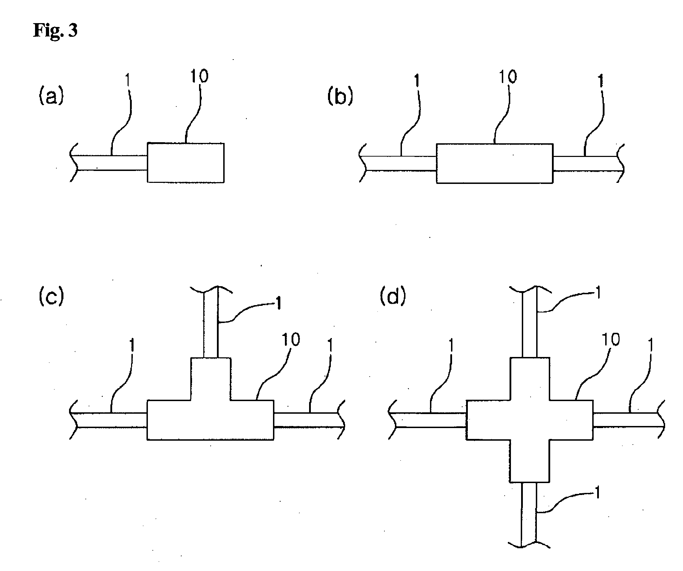

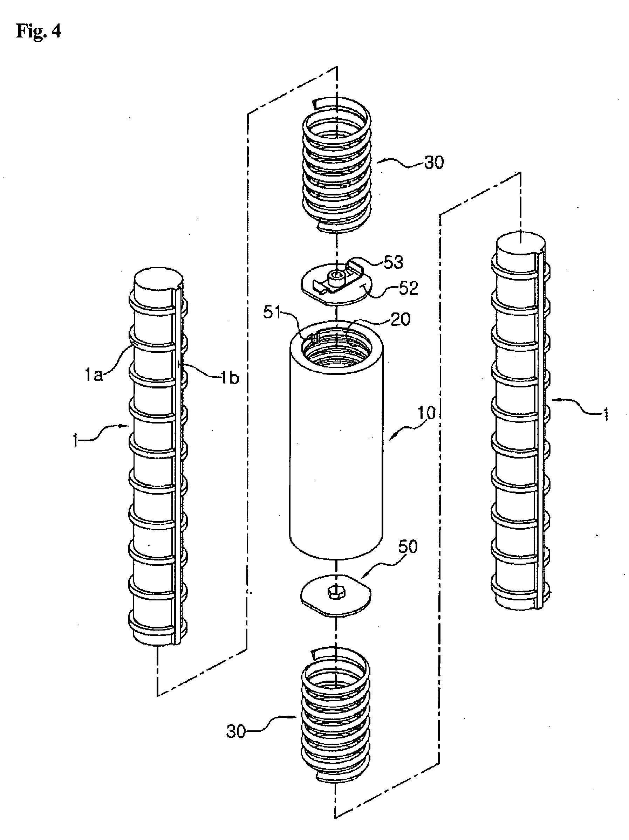

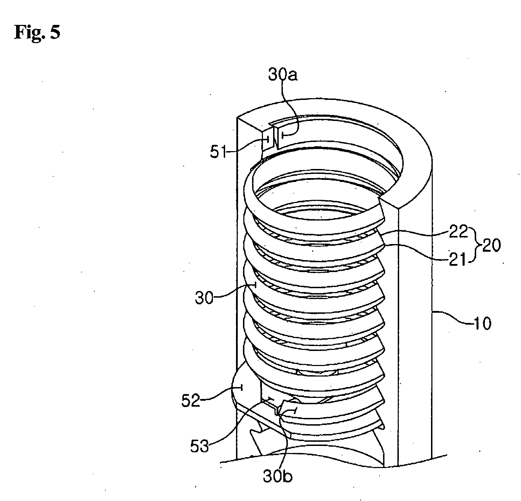

FIG. 3 is example views showing the states in which reinforcement bar couplers according to the present invention are used, FIG. 4 is an exploded perspective view showing a reinforcement bar coupler according to a first embodiment of the present invention, and FIG. 5 is a perspective view showing a part of the reinforcement bar coupler according to the first embodiment of the present invention which is partially cut away.

Referring to the figures, the reinforcement bar coupler according to the first embodiment of the present invention includes a coupler cap 10, female threads 20, a clamping spring 30 and one-touch connecting means 50.

The coupler cap 10 is configured such that the reinforcement bars 1 which are to be connected and fixed to each other are inserted into the coupler cap 10 through the open outer ends. As shown in FIG. 3, the coupler cap 10 may have a variety of shapes, such as (a) an anchor type, (b) a linear type, (c) a T type, (d) a cross type, and so on.

As shown in the figures, each of the reinforcement bars 1 which are referred to herein may include a reinforcement bar having a typical shape in which the joint protrusions 1a and the rib protrusions 1b are formed, as well as a bolt having a male thread on the outer circumference thereof and a bar type member having a predetermined length.

According to the first embodiment of the present invention, the coupler cap 10 is illustrated as a linear type which is most frequently used on work sites. The coupler cap 10 is configured as a hollow cylindrical pipe which is symmetrical about the longitudinal axis such that the pair of reinforcement bars 1 are connected to each other in the longitudinal direction.

The female threads 20 defines spaces into which the clamping springs 30 are fitted into and fastened to. According to the first embodiment of the present invention, the female threads 20 are spirally recessed along the circumferential direction on the inner surface of the coupler cap 10.

In the meantime, the female threads 20 have inclined taper planes 22 which protrude from recessed bottoms 21 in the direction toward the outer ends, such that the clamping spring 30 can slide and move along the female threads 20.

In a machining process of forming the female threads 20 on the inner surface of the coupler cap 10, a cutting tap which spirally cuts the inner surface may be used. It is preferable to use a rolled tap which forms the female threads 20 by plastically deforming the inner surface of the coupler cap 10 during heating in order to save processing costs.

The clamping springs 30 are components which hold the reinforcement bars 1 inserted into the coupler cap 10. The clamping springs 30 have a spiral shape that corresponds to the female threads 20, and are made of a material such as a spring steel that can be twisted and changed in diameter under an external force and be elastically restored. The clamping springs 30 are fitted into and fastened to the female threads 20. That is, the clamping springs 30 are a type of torsion spring which is changed in diameter in response to the twisted direction and is elastically restorable.

The clamping springs 30 can be rotated in one direction along the female threads 20 from the outer ends of the coupler cap 10, and be fitted into and fastened to the female threads 20 inside the coupler cap 10.

The clamping springs 30 are configured such that they are closely abutted to the recessed bottoms 21 of the female threads 20 and are unwound so that their diameter is increased, thereby enabling the reinforcement bars 1 to slip, when the reinforcement bars 1 are inserted into the clamping springs 30. Specifically, when the reinforcement bars 1 are inserted into the clamping springs 30, the clamping springs 30 are pushed in the direction toward the recessed bottoms 21 of the female threads 20 and are unwound so that their diameter is increased, due to a force under which the reinforcement bars 1 are inserted and a frictional force exerted onto the reinforcement bars 1, thereby enabling the reinforcement bars 1 to slip.

Furthermore, according to the first embodiment of the present invention, in the initial state before the reinforcement bars 1 are inserted by the one-touch connecting means 50, the clamping springs 30 are fastened into the female threads 20 of the coupler cap 10 in the state in which they are twisted in the direction in which their diameter is increased. Accordingly, the clamping springs 30 are minimally influenced by the diameter of the reinforcement bars 1, and allow the reinforcement bars 1 to be properly inserted irrespective of the types of the reinforcement bars 1. A detailed description thereof will be given with respect to a second embodiment of the present invention which will be described later.

In addition, in the state in which the reinforcement bars 1 are inserted, when an external force is applied in the direction opposite to the direction in which the reinforcement bars 1 are inserted, the clamping springs 30 are wound while moving in the direction toward the outer ends of the coupler cap 10 along the inclined taper planes 22 due to the frictional force exerted onto the reinforcement bars 1 so that the diameter of the clamping springs 30 is gradually decreased, thereby holding the reinforcement bars 1.

The one-touch connecting means 50 prevent the clamping springs 30 from interfering with the insertion of the reinforcement bars 1 in the process in which the reinforcement bars 1 are being inserted into the coupler cap 10. When the insertion of the reinforcement bars 1 into the coupler cap 10 is completed, the one-touch connecting means 50 allow the clamping spring 30 to hold the reinforcement bars 1. Each of the one-touch connecting means 50 includes a hook portion 51, a support plate 52 and a leaf spring 53. A detailed description thereof will be given with respect to the second embodiment of the present invention which will be described later.

The reinforcement bar coupler according to the first embodiment of the present invention has been described hereinabove, and a detailed description will be given below of a reinforcement bar coupler according to the second embodiment of the present invention.

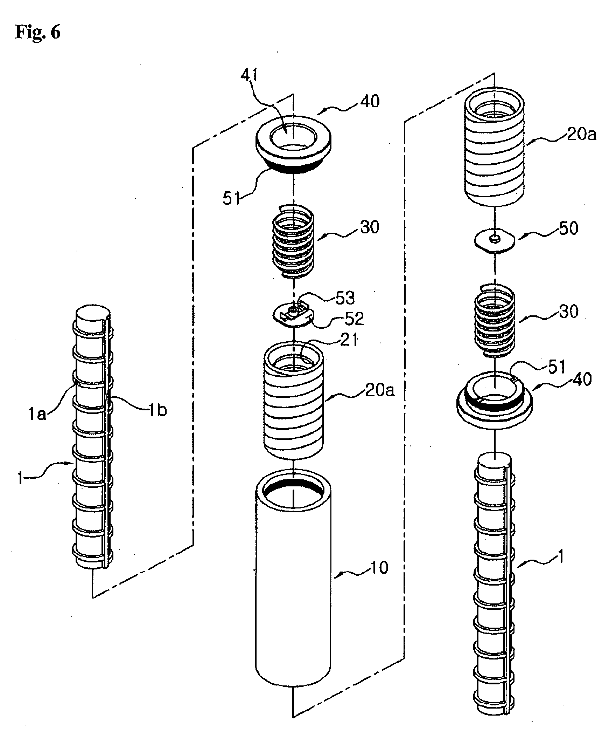

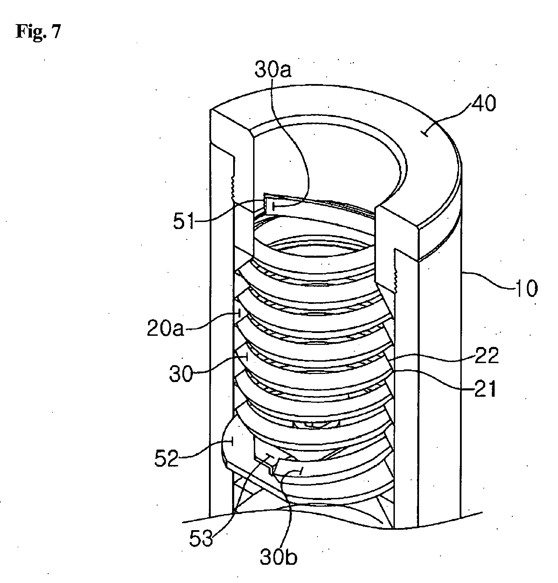

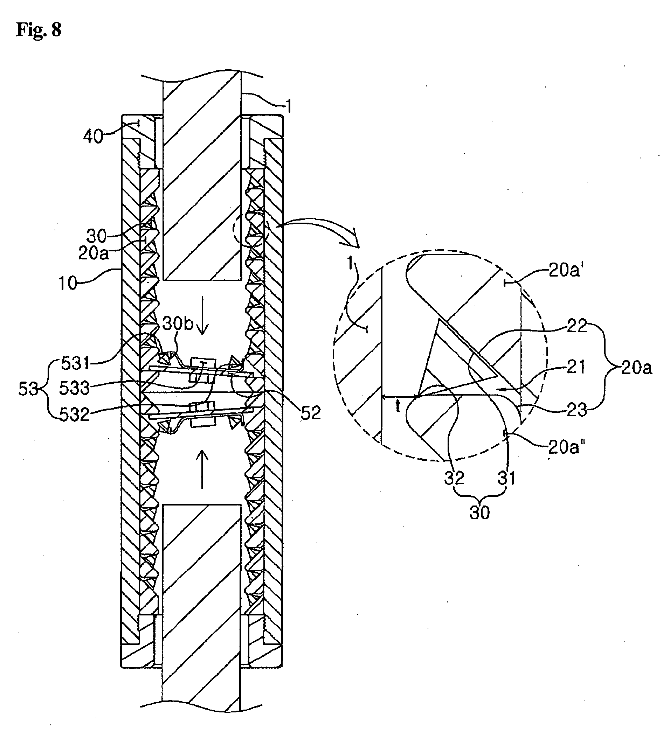

FIG. 6 is an exploded perspective view showing the reinforcement bar coupler according to the second embodiment of the present invention, FIG. 7 is a perspective view showing a part of the reinforcement bar coupler according to the second embodiment of the present invention which is partially cut away, and FIG. 8 to FIG. 10 are side cross-sectional views showing the state in which the reinforcement bar coupler according to the second embodiment of the present invention is used.

Referring to the figures, the reinforcement bar coupler according to the second embodiment of the present invention includes a coupler cap 10, base springs 20a, clamping springs 30, anti-dislodgement units 40 and one-touch connecting means 50.

When compared with the first embodiment of the present invention, the reinforcement bar coupler according to the second embodiment of the present invention further includes the anti-dislodgement units 40, with the base springs 20a substituting the female threads 20.

The coupler cap 10 is a hollow cylindrical pipe which serves as a housing of the reinforcement bar coupler according to the second embodiment of the present invention which connects and couples a pair of reinforcement bars 1 to each other in the longitudinal direction. The coupler cap 10 is configured such that both ends are symmetrical to each other about the longitudinal axis such that the pair of reinforcement bars 1 are respectively inserted into the coupler cap 10 through the outer ends thereof. The base springs 20a are inserted into and disposed in the coupler cap 10.

The base springs 20a are components which are fitted into the coupler cap 10, and to which the clamping springs 30 are fitted and fastened. The base springs 20a are spirally wound such that they have an outer diameter corresponding to the inner diameter of the coupler cap 10, and have bottoms 21 on the inner circumference thereof. The bottoms 21 are spirally wound, and are spirally recessed in the circumferential direction at positions where adjacent joints 20a' and 20a" meet each other.

That is, the clamping springs 30 having the spiral shape are fitted into and fastened to the bottoms 21 of the base springs 20a which are spirally recessed.

In addition, the method of forming the female threads 20 directly on the inner surface of the coupler cap 10 as in the first embodiment of the present invention may be regarded as a method of forming the bottoms 21. However, this method is complicated and the cost of manufacture is increased, which is problematic. Therefore, according to the second embodiment of the present invention, the configuration of the base springs 20a, which can be more easily manufactured than the threads 20, is employed.

In addition, each base spring 20a has an inclined taper plane 22 which protrudes from the recessed bottom 21 in the direction toward the outer end.

Specifically, in the process of manufacturing the base springs 20a, the base springs 20a are formed such that their cross-section has a substantially triangular shape, so that the inclined taper planes 22 are naturally formed. As clamping taper planes 31 of the clamping springs 30 are meshed with the inclined taper planes 22, the clamping springs 30 can slide and move.

In addition, each base spring 20a has rounded portions 23 which are machined along the corners of the upper edge of the joints 20a' and 20a" such that they have a round shape. Consequently, when the clamping spring 30 moves in the direction toward the outer end of the coupler cap 10 along the inclined taper plane 22, due to the external force, the upper edge of the joint 20a" overlaps the inner portion of the lower edge of the adjacent joint 20a' so that the inner diameter is decreased.

Specifically, in the state in which the reinforcement bars 1 are inserted, when the external force is applied to the reinforcement bars 1 in the direction opposite to the direction in which the reinforcement bars 1 are inserted, the clamping springs 30 are wound while moving in the direction toward the outer ends of the coupler cap 10 along the inclined taper planes 22 due to the frictional force exerted onto the reinforcement bars 1 so that their diameter is gradually decreased, thereby holding the reinforcement bars 1. In this case, like the clamping springs 30, the base springs 20a are subjected to an external force in the direction opposite to the direction in which the reinforcement bars 1 are inserted. Since each base spring 20a has the rounded portion 23 which is machined in the longitudinal direction along each corner of the upper edges of the joints 20a' and 20", the upper edge of one joint 20a" overlaps the inner portion of the lower edge of the adjacent joint 20a' and the inner diameter of the base springs 20a is also decreased, so that the reinforcement bar 1 can be more reliably held.

Table 1 and Table 2 below represent results of tensile strength tests for reinforcement bar couplers according to KS D 0249: 2003 (regulated March 4, 2003), a test method for a mechanical coupling of steel bars for steel-reinforced concrete published by the Korean Standards Association.

First, Table 1 below represents the result of the tensile strength test for a reinforcement bar coupler in which no rounded portions 23 are formed in the base springs 20a, i.e. the adjacent joints 20a' and 20a" of the base springs 20a do not overlap each other so that the inner diameter of the base springs 20a is not changed when the reinforcement bars 1 are pulled in the direction toward the both ends of the coupler cap 10.

**Table 1**

| Test item | Unit | Classification | Result | Test method |
|---|---|---|---|---|
| Tensile strength | N/mm² | 1 | 582 | KS D 0249: 2003 |
| Tensile strength | N/mm² | 2 | 581 | KS D 0249: 2003 |
| Tensile strength | N/mm² | 3 | 476 | KS D 0249: 2003 |

Table 2 below represents the result of the tensile strength test for a reinforcement bar coupler in which the rounded portions 23 are formed in the base springs 20a, i.e. the adjacent joints 20a' and 20a" of the base springs 20a overlap each other so that the inner diameter of the base springs 20a is decreased when the reinforcement bars 1 are pulled in the direction toward the both ends of the coupler cap 10.

**Table 2**

| Test item | Unit | Classification | Result | Test method |
|---|---|---|---|---|
| Tensile strength | N/mm² | 1 | 621 | KS D 0249: 2003 |
| Tensile strength | N/mm² | 2 | 601 | KS D 0249: 2003 |

In Table 2 above, the reinforcement bar used in the secondly repeated test was fractured, failing to withstand the tensile force of a test device, and thus no further tests were carried out

However, based on the above test results, it can be appreciated that the upper edge of each joint 20a" overlaps the inner portion of the lower edge of the adjacent joint 20a' so that the inner diameter of the base spring 20a is decreased when the rounded portion 23 is formed in the base spring 20a. This shows that the force of holding the reinforcement bars 1 is further enhanced. It can be appreciated that the tensile strength of the reinforcement bar coupler according to the second embodiment of the present invention is greater than the tensile strength of the reinforcement bars 1.

The clamping springs 30 are components which hold the reinforcement bars 1 inserted into the coupler cap 10. The clamping springs 30 have a spiral shape that corresponds to the bottoms 21 of the base springs 20, and are made of a material such as a spring steel that can be twisted and changed in diameter under an external force and be elastically restored. The clamping springs 30 are fitted into and fastened to the base springs 20. That is, the clamping springs 30 are a type of torsion spring which is changed in diameter in response to the twisted direction and is elastically restorable.

The clamping springs 30 can be rotated in one direction along the bottoms 21 of the base springs 20 from the outer ends of the coupler cap 10, and be fitted into and fastened to the bottoms 21 of the base springs 20 inside the coupler cap 10.

The clamping springs 30 are configured such that they are closely abutted to the recessed bottoms 21 of the base springs 20 and are unwound so that their diameter is increased, thereby enabling the reinforcement bars 1 to slip, when the reinforcement bars 1 are inserted into the clamping springs 30. Specifically, when the reinforcement bars 1 are inserted into the clamping springs 30, the clamping springs 30 are pushed in the direction toward the recessed bottoms 21 of the base springs 20 and are unwound so that their diameter is increased due to a force under which the reinforcement bars 1 are inserted and a frictional force exerted onto the reinforcement bars 1, thereby enabling the reinforcement bars 1 to slip.

Furthermore, according to the second embodiment of the present invention, as shown in FIG. 8, in the initial state before the reinforcement bars 1 are inserted by the one-touch connecting means 50, the clamping springs 30 are fastened into the recessed bottoms 21 of the base springs 20 in the state in which they are twisted in the direction in which their diameter is increased. Accordingly, the clamping springs 30 are minimally influenced by the diameter of the reinforcement bars 1, and allow the reinforcement bars 1 to be properly inserted irrespective of the types of the reinforcement bars 1. A detailed description thereof will be given later.

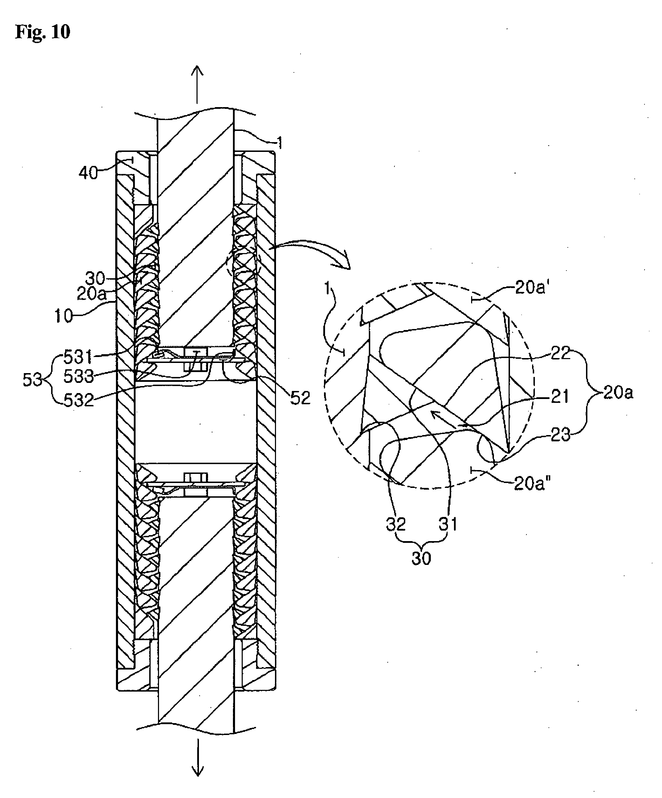

In addition, as shown in FIG. 10, in the state in which the reinforcement bars 1 are inserted, when an external force is applied in the direction opposite to the direction in which the reinforcement bars 1 are inserted, the clamping springs 30 are wound while moving in the direction toward the outer ends of the coupler cap 10 along the inclined taper planes 22 due to the frictional force exerted onto the reinforcement bars 1 so that the diameter of the clamping springs 30 is gradually decreased, thereby holding the reinforcement bars 1.

Although the clamping springs 30 may have a circular cross-section like typical springs, the clamping springs 30 according to the first embodiment of the present invention have the clamping taper planes 31 that correspond to the inclined taper planes 22 such that the clamping springs 30 can slide and move along the inclined taper planes 22. As shown in FIG. 10, the cross-section has a triangular shape such that angled corner portions 32 are formed which partially thrust into the reinforcement bars 1 when the diameter is decreased.

The anti-dislodgement units 40 are components which prevent the base springs 20a from being dislodged in the direction toward the outer ends of the coupler cap 10 in the state in which the base springs 20a are inserted into the coupler cap 10. Each of the anti-dislodgement units 40 has a reinforcement bar passage hole 41 through which a corresponding reinforcement bar 1 can pass. The anti-dislodgement units 40 are fastened to the outer ends on both sides of the coupler cap 10.

In the meantime, according to the first embodiment of the present invention, a hook portion 51 is formed in each lower end of the anti-dislodgement units 40 as components of the one-touch connecting means 50 which can support one end of each of the clamping springs 30. In addition, as shown in the figures, when the anti-dislodgement units 40 are configured so as to have threads such that they are fixed to the coupler cap 10 via rotation, the hook portion 51 can twist the clamping springs 30 in the direction in which their diameter is increased so that the initial state before the insertion of the reinforcement bar 1 can be naturally realized.

The one-touch connecting means 50 are components that prevent the clamping springs 30 from interfering with the insertion of the reinforcement bars 1 while the reinforcement bars 1 are being inserted into the coupler cap 10 and allow the clamping springs 30 to hold the reinforcement bars 1 when the insertion of the reinforcement bars 1 into the coupler cap 10 is completed. Each of the one-touch connecting means 50 includes the hook portion 51, a support plate 52 and a leaf spring 53.

The hook portion 51 is a component that supports one end 30a of the clamping spring 30 between the hook portion 51 and the protrusion 531 of the leaf spring 53 in the state in which the clamping spring 30 is twisted in the direction in which its diameter is increased. The hook portion 51 is provided adjacent to each outer end of the coupler cap 10. Although each hook portion 51 may be formed on one end of the base spring 20a, the hook portion 51 is formed on each of the anti-dislodgement units 40 according to the second embodiment of the present invention. In the meantime, the hook portion 51 can have any shapes which belong to the scope of protection of the present invention as long as they can hold the rotation of one end 30a of the clamping spring 30.

The support plate 52 is a component that is provided at the inner center of the coupler cap 10. The support plate 52 can rotate along the bottom 21 of the base spring 20a before fastening of the clamping spring 30, and be fixed to the inner central portion of the coupler cap 10 integrally with the leaf spring 53 which is supported by the support plate 52.

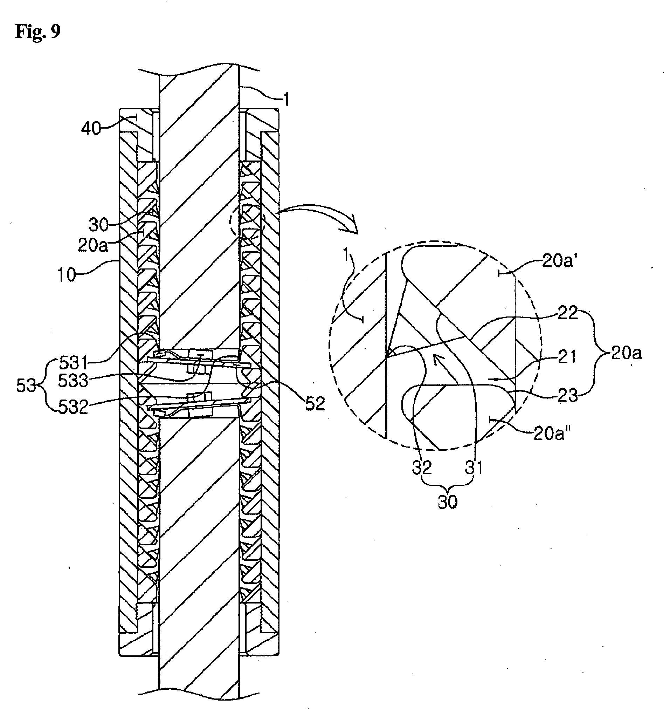

The leaf spring 53 is a component that selectively supports the other end 30b of the clamping spring 30, and is fixed to the support plate 52 using a coupling bolt 533. As shown in FIG. 8, the leaf spring 53 has a protrusion 531 which protrudes from the support plate 52 between the hook portion 51 and the leaf spring 53 so as to support the other end of the clamping spring 30 in the state in which the clamping spring 30 is twisted in the direction in which its diameter is increased. As shown in FIG. 9, when the reinforcement bar 1 presses against the protrusion 531 while being inserted into the coupler cap 10, the protrusion 531 is recessed due to elasticity and no longer supports the other end 30b of the clamping spring 30, so that the diameter of the clamping spring 30 is restored due to elasticity.

In the meantime, it is preferred that a guide portion 532 be formed at the opposite side of the protrusion 531 of the leaf spring 53. The guide portion 532 guides the clamping spring 30 so as to be positioned inside by decreasing the diameter of the other end portion of the clamping spring 30 so that the other end 30b of the clamping spring 30 is supported by the protrusion 531.

In addition, the head of the coupling bolt 533 which protrudes a predetermined height from the support plate 52 serves as a stopper which restricts insertion of the reinforcement bar 1. The head of the coupling bolt 533 also serves to provide a buffering space between the support plate 52 and the reinforcement bar 1 which is inserted. Otherwise, the leaf spring 53 may be pressed flat due to an insertion force resulting from the insertion of the reinforcement bar 1 and thus be permanently damaged.

FIG. 8 to FIG. 10 show the state in which the reinforcement bar coupler according to the second embodiment of the present invention is used. FIG. 8 shows the process in which the reinforcement bars 1 are inserted into the coupler cap 10. The clamping springs 30 are supported and are closely abutted to the bottoms 21 of the base springs 20a by the hook portions 51 and the protrusions 531 of the leaf springs 53 in the state in which the clamping springs 30 are twisted in the direction in which their diameter is increased, so that a predetermined gap "t" is formed between the reinforcement bars 1. Consequently, even if there is a difference in the diameter between the reinforcement bars 1 due to characteristics of the manufacturing process of the reinforcement bars 1, the reinforcement bars 1 can be properly inserted without interfering with the clamping springs 30.

FIG. 9 shows the state in which the insertion of the reinforcement bars 1 into the coupler cap 10 is completed. Since one end of each of the reinforcement bars 1 presses against the protrusions 531 of the leaf springs 53, the other end 30b of the clamping springs 30 which has been supported by the protrusions 531 of the leaf springs 53 is no longer supported, so that the clamping springs 30 are elastically restored. Consequently, the clamping springs 30 are closely abutted to the reinforcement bars 1.

FIG. 10 shows the case in which the reinforcement bars 1 are subjected to an external force in the direction opposite to the direction in which the reinforcement bars 1 are inserted, i.e. an external force in the direction toward the outer ends of the coupler cap 10, in the state in which the insertion of the reinforcement bars 1 into the coupler cap 10 is completed. Consequently, the clamping taper planes 31 of the clamping springs 30 slide and move along the inclined taper planes 22 due to the frictional force between the clamping springs 30 and the reinforcement bars 1 so that the diameter of the clamping springs 30 is gradually decreased, and portions of the angled corner portions 32 of the clamping springs 30 thrust into the reinforcement bars 1, so that the clamping springs 30 securely fix the reinforcement bars 1.

In the meantime, each reinforcement bar 1 has the opposing rib protrusions 1b and 2b on both sides of the body, which is typically cylindrical, in the longitudinal direction thereof The joint protrusions 1a are circumferentially formed on both sides of the rib protrusions 1b at predetermined intervals. The portions of the reinforcement bars 1 into which the angled corner portions 32 of the clamping springs 30 thrust will be the joint protrusions 1a and the rib protrusions 1b of the reinforcement bars 1 rather than the cylindrical bodies of the reinforcement bars 1.

In addition, as described above with respect to the rounded portions 23 of the base springs 20a, in the state in which the reinforcement bars 1 are inserted, when the reinforcement bars 1 are subjected to an external force in the direction opposite to the direction in which the reinforcement bars 1 are inserted, the clamping springs 30 are wound while being moved in the direction toward the outer ends of the coupler cap 10 along the inclined taper planes 22 under the frictional force exerted onto the reinforcement bars 1 so that their diameter is gradually decreased, thereby holding the reinforcement bars 1. In this case, like the clamping springs 30, the base springs 20 are also subjected to an external force in the direction opposite to the direction in which the reinforcement bars 1 are inserted, and the base springs 20a have the rounded portions 23, which are rounded in the longitudinal direction along the corners of the upper edges of the joints 20a' and 20a". Consequently, the upper edges of each joint 20a" overlap the inner portions of the lower edges of the adjacent joint 20a', and the diameter of the base springs 20a is also decreased, so that the reinforcement bars 1 can be more reliably held.

Based on the systematic coupling relationship of the above-described components, it is possible to easily connect and couple the reinforcement bars to each other using the reinforcement bar coupler according to the first embodiment of the present invention with one touch based on a change in the diameter of the clamping springs 30 caused by the twisting, even though the reinforcement bar coupler has a relatively simple configuration including the coupler cap 10, the base springs 20a, the clamping springs 30 and the anti-dislodgment devices 40. Since the bottoms 21 and the inclined taper planes 22 are formed on the base springs 20a without machining the female threads 20 on the inner surface of the coupler cap 10, the reinforcement bar coupler can be easily machined and manufactured. Since the cross-section of the clamping springs 30 has a triangular shape, the reinforcement bars 1 can be more securely fixed based on the sliding movement of the clamping springs 30 and the thrust of the angled end portions into the reinforcement bars 1. Since the one-touch connecting means 50 are provided, the clamping springs 30 can be inserted into and fastened to the base springs 20a in the state in which the clamping springs 30 are twisted in the direction in which their diameter is increased, and the diameter of the clamping springs 30 is restored due to elasticity when the insertion of the reinforcement bars 1 is completed. Consequently, even if there is a difference in the diameter between the reinforcement bars 1 due to characteristics of the manufacturing process of the reinforcement bars 1, the reinforcement bars 1 can be properly inserted without interfering with the clamping springs 30.

The reinforcement bar coupler that has been set forth above and shown in the drawings is merely a certain embodiment of the present invention, and it should not be construed that the foregoing embodiment limits the technical principle of the present invention. The scope of protection of the present invention is defined by only the description of the appended claims. It is apparent to a person having ordinary skill in the art that modifications and changes can be made to the embodiments without departing from the scope of the present invention, and such modifications and changes shall belong to the scope of protection of the present invention.

### [Industrial Applicability]

The present invention having the above-described configuration can easily connect and fix reinforcement bars with one touch based on a change in the diameter of the clamping springs by twisting even if it has a simple configuration, and thus is industrially useful.

## Claims

1. A reinforcement bar coupler for connecting and fixing reinforcement bars(1), comprising:
a hollow coupler cap (10) having an open outer end through which the a reinforcement bar (1) is to be inserted into the coupler cap (10);
a spiral female thread (20) circumferentially recessed on an inner surface of the coupler cap (10), the female thread (20) having an inclined taper plane (22) which is inclined and protrudes from a recessed bottom (21) in a direction toward the outer end; and
a clamping spring (30) having a spiral shape that corresponds to the female thread (20), the clamping spring (30) made of a material that can be twisted and changed in diameter under an external force and be elastically restored, the clamping spring (30) fitted into and fastened to the female thread (20),
**characterised in that**
when the reinforcement bar (1) is inserted, the clamping spring (30) is closely abutted to the recessed bottom (21) of the female thread (20) and is unwound so that a diameter thereof is increased so thatenabling the reinforcement bar (1) to slips into the spring (30), and
when an external force in a direction opposite to a direction in which the reinforcement bar (1) is inserted is applied in a state in which the reinforcement bar (1) is inserted, the clamping spring (30) moves in the direction toward the outer end of the coupler cap (10) along the inclined taper plane (22) due to a frictional force exerted onto the reinforcement bar (1) and is wound on the reinforcement bar (1) so that the diameter thereof is gradually decreased, thereby holding the reinforcement bar (1).

2. The reinforcement bar coupler according to claim 1, wherein the female thread (20) is formed by means of a base spring (20a) fitted into the coupler cap (10), wherein the base spring (20a) is spirally wound so as to have an outer diameter corresponding to an inner diameter of the coupler cap (10), and has bottoms (21) which are formed on an inner surface of the base spring (20a), are spirally wound, and are spirally recessed in a circumferential direction at positions where adjacent joints (20a', 20a') meet, and inclined taper planes (22) which are inclined and protrude from the recessed bottoms (21) in a direction toward the outer end; and
the reinforcement bar coupler further comprises an anti-dislodgement (40) unit having a reinforcement bar passage hole in a central portion thereof, the reinforcement bar passage hole having a predetermined diameter through which the reinforcement bar (1) can pass, wherein the anti-dislodgement unit (40) is fastened to the outer end of the coupler cap (10) in order to prevent the base spring (20a) from being dislodged in the direction toward the outer end of the coupler cap (10) in a state in which the base spring (20a) is fitted into the coupler cap (10).

3. The reinforcement bar coupler according to claim 2, wherein the base spring (20a) has a rounded portion (23) which is roundly machined along each corner of upper edges of the joints such that, when the clamping spring (30) is moved in the direction toward the outer end of the coupler cap (10) along the inclined taper plane (22), an upper edge of each of the joints (20a', 20a") overlaps an inner portion of a lower edge of an adjacent joint (20a', 20a"), and an inner diameter of the base spring (20a) is decreased under an external force.

4. The reinforcement bar coupler according to any one of claims 1 to 3, wherein the clamping spring (30) has clamping taper planes, which correspond to the inclined taper planes (22) such that the clamping spring (30) is slidable and movable along the inclined taper plane (22), and an angled corner portion, a part of which thrusts into the reinforcement bar (1) when the diameter of the clamping spring (30) is decreased.

5. The reinforcement bar coupler according to any one of claims 1 to 3, further comprising a one-touch connecting means (50) which prevents the clamping spring (30) from interfering with insertion of the reinforcement bar (1) while the reinforcement bar (1) is being inserted into the coupler cap (10), and causes the clamping spring (30) to hold the reinforcement bar (1) when the insertion of the reinforcement bar (1) into the coupler cap (10) is completed; and
wherein the one-touch connecting means (50) includes a hook portion (51) provided adjacent to the outer end (30a) of the coupler cap (10), the hook portion (51) supporting one end (30a) of the clamping spring (30), a support plate (52) provided inside the coupler cap (10), and a leaf spring (53) supported by the support plate (52), the leaf spring (53) having a protrusion (531) protruding from the support plate (52) between the hook portion (51) and the leaf spring (53) such that the other end (30b) of the clamping spring (30) is supported in a state in which the clamping spring (30) is twisted in a direction in which the diameter there is increased, wherein, when the reinforcement bar (1) is inserted into the coupler cap (10) and presses against the protrusion (531), the protrusion (531) is recessed due to elasticity and no longer supports the other end (30b) of the clamping spring (30), so that the diameter of the clamping spring (30) is restored due to elasticity.

## Patentansprüche

1. Bewehrungsstabkoppler zum Verbinden und Fixieren von Bewehrungsstäben (1), umfassend:
eine hohle Kopplerkappe (10) mit einem offenen äußeren Ende, durch das ein Bewehrungsstab (1) in die Kopplerkappe (10) einsetzbar ist;
ein Innengewinde (20), das umfänglich auf einer Innenfläche der Kopplerkappe (10) ausgebildet ist, wobei das Innengewinde (20) eine geneigte konische Ebene (22) aufweist, die geneigt ist und von einem vertieften Boden (21) in Richtung des äußeren Endes vorsteht; und
eine Klemmfeder (30) mit spiralförmiger Form, die mit dem Innengewinde (20) korrespondiert, wobei die Klemmfeder (30) aus einem Material besteht, das unter Einwirkung einer externen Kraft verdreht und im Durchmesser verändert und elastisch wiederherstellbar ist, wobei die Klemmfeder (30) in das Innengewinde (20) eingesetzt und daran befestigt ist,
**dadurch gekennzeichnet, dass**
wenn der Bewehrungsstab (1) eingesetzt wird, die Klemmfeder (30) eng an dem vertieften Boden (21) des Innengewinnes (20) anliegt und entspannt ist, so dass ihr Durchmesser erweitert ist und das Hineingleiten des Bewehrungsstabes (1) in die Feder (30) ermöglicht, und
wenn eine externe Kraft in einer Richtung entgegengesetzt einer Richtung, in welcher der Bewehrungsstab (1) eingesetzt wird, in dem Zustand aufgewendet wird, in dem der Bewehrungsstab (1) eingesetzt wird, sich die Klemmfeder (30) aufgrund einer Reibungskraft, die auf den Bewehrungsstab (1) ausgeübt wird, in Richtung des äußeren Endes der Kopplerkappe (10) entlang der konischen Ebene (22) bewegt und um den Bewehrungsstab (1) gewunden wird, so dass ihr Durchmesser allmählich abnimmt und sie den Bewehrungsstab (1) hält.

2. Bewehrungsstabkoppler nach Anspruch 1, wobei das Innengewinde (20) mithilfe einer Basisfeder (20a) gebildet wird, die in die Kopplerkappe (10) eingesetzt wird, wobei die Basisfeder (20a) so gewunden ist, dass ihr Außendurchmesser mit einem Innendurchmesser der Kopplerkappe (10) korrespondiert, und Böden (21) aufweist, die auf einer Innenfläche der Basisfeder (20a) ausgebildet und spiralförmig gewunden sowie spiralförmig in einer Umfangsrichtung an Positionen vertieft sind, an welchen benachbarte Stöße (20a', 20a") aufeinandertreffen, und geneigte konische Ebenen (22), die geneigt sind und von den vertieften Böden (21) in Richtung des äußeren Endes vorstehen; und
der Bewehrungsstabkoppler des Weiteren eine Verrutschungsverhinderungseinheit (40) umfasst, die in einem zentralen Teil eine Bewehrungsstab-Durchgangsöffnung aufweist, wobei die Bewehrungsstab-Durchgangsöffnung einen vorgegebenen Durchmesser aufweist, durch den der Bewehrungsstab (1) durchgeführt werden kann, wobei die Verrutschungsverhinderungseinheit (40) an den äußeren Ende der Kopplerkappe (10) befestigt ist, um zu verhindern, dass die Basisfeder (20a) in Richtung des äußeren Endes der Kopplerkappe (10) in dem Zustand verrutscht, in dem die Basisfeder (20a) in die Kopplerkappe (10) eingepasst wird.

3. Bewehrungsstabkoppler nach Anspruch 2, wobei die Basisfeder (20a) einen abgerundeten Teil (23) aufweist, der entlang jeder Ecke der Oberkanten der Stöße so abgerundet ist, dass, wenn die Klemmfeder (30) in Richtung des äußeren Endes der Kopplerkappe (10) entlang der geneigten konischen Ebene (22) bewegt wird, eine Oberkante jedes der Stöße (20a', 20a") einen inneren Teil einer Unterkante eines benachbarten Stoßes (20a', 20a") überlappt, und ein Innendurchmesser der Basisfeder (20a) unter Einwirkung einer externen Kraft abnimmt.

4. Bewehrungsstabkoppler nach einem der Ansprüche 1 bis 3, wobei die Klemmfeder (30) konische Klemmebenen aufweist, die mit den geneigten konischen Ebenen (22) korrespondieren, so dass die Klemmfeder (30) entlang der geneigten konischen Ebene (22) gleiten und bewegt werden kann, und einen abgewinkelten Eckteil, von dem ein Teil in den Bewehrungsstab (1) vorgetrieben wird, wenn der Durchmesser der Klemmfeder (30) abnimmt.

5. Bewehrungsstabkoppler nach einem der Ansprüche 1 bis 3, des Weiteren umfassend ein Berührungs-Verbindungsmittel (50), welches verhindert, dass die Klemmfeder (30) das Einsetzen des Bewehrungsstabes (1) behindert, während der Bewehrungsstab (1) in die Kopplerkappe (10) eingesetzt wird, und bewirkt, dass die Klemmfeder (30) den Bewehrungsstab (1) hält, wenn das Einsetzen des Bewehrungsstabes (1) in die Kopplerkappe (10) abgeschlossen ist; und
wobei das Berührungs-Verbindungsmittel (50) einen Hakenteil (51) neben dem äußeren Ende (30a) der Kopplerkappe (10) aufweist, wobei der Hakenteil (51) ein Ende (30a) der Klemmfeder (30) hält, eine Stützplatte (52) in der Kopplerkappe (10) angeordnet ist, und wobei eine Blattfeder (53) von der Stützplatte (52) getragen wird, wobei die Blattfeder (53) einen Vorsprung (531) aufweist, der zwischen dem Hakenteil (51) und der Blattfeder (53) von der Stützplatte (52) vorsteht, so dass das andere Ende (30b) der Klemmfeder (30) in einem Zustand gehalten wird, in dem die Klemmfeder (30) in einer Richtung verdreht ist, in welcher der Durchmesser erweitert ist, wobei, wenn der Bewehrungsstab (1) in die Kopplerkappe (10) eingesetzt wird und gegen den Vorsprung (531) drückt, der Vorsprung (531) aufgrund der Elastizität eingedrückt wird und das andere Ende (30b) der Klemmfeder (30) nicht mehr hält, so dass der Durchmesser der Klemmfeder (30) aufgrund der Elastizität wiederhergestellt wird.

## Revendications

1. Coupleur de barres de renfort pour relier et fixer des barres de renfort (1) comprenant :
un capuchon de coupleur creux (10) qui a une extrémité extérieure ouverte à travers laquelle la barre de renfort (1) doit être insérée dans le capuchon de coupleur (10) ;
un filetage femelle en spirale (20) qui est évidé sur le circonférence sur une surface intérieure du capuchon de coupleur (10), le filetage femelle (20) ayant un plan oblique incliné (22) qui est incliné et qui fait saillie à partir d'un fond évidé (21) dans une direction vers l'extrémité extérieure et
un ressort de serrage (30) qui a une forme en spirale qui correspond au filetage femelle (20), le ressort de serrage (30) étant fait en un matériau qui peut être tordu et dont le diamètre peut être changé sous l'effet d'une force extérieure et qui a une reprise élastique, le ressort de serrage (30) étant intégré à et fixé au filetage femelle (20),
**caractérisé en ce que**,
lorsque la barre de renfort (1) est insérée, le ressort de serrage (30) est en butée serrée avec le fond évidé (21) du filetage femelle (20) et est déroulé si bien qu'un diamètre de celui-ci est augmenté en permettant ainsi à la barre de renfort (1) de glisser dans le ressort (30) et,
lorsqu'une force extérieure dans une direction opposée à la direction dans laquelle la barre de renfort (1) est insérée est appliquée dans un état dans lequel la barre de renfort (1) est insérée, le ressort de serrage (30) se déplace dans la direction vers l'extrémité extérieure du capuchon de coupleur (10) le long du plan oblique incliné (22), ceci étant dû à une force de friction exercée sur la barre de renfort (1), et est enroulé sur la barre de renfort (1) si bien que le diamètre de celui-ci est graduellement diminué en maintenant ainsi la barre de renfort (1).

2. Coupleur de barres de renfort selon la revendication 1, le filetage femelle (20) étant formé au moyen d'un ressort de base (20a) intégré au capuchon de coupleur (10), le ressort de base (20a) étant enroulé en spirale de manière à avoir un diamètre extérieur qui correspond à un diamètre intérieur du capuchon de coupleur (10) et ayant des fonds (21) qui sont formés sur une surface intérieure du ressort de base (20a), qui sont enroulés en spirale et qui sont évidés en spirale dans une direction circonférentielle à des positions auxquelles des joints adjacents (20a', 20a") se rencontrent, et des plans obliques inclinés (22) qui sont inclinés et qui font saillie à partir des fonds évidés (21) dans une direction vers l'extrémité extérieure et
le coupleur de barres de renfort comprend de plus une unité anti-délogement (40) qui a un trou de passage de barre de renfort dans une portion centrale de celle-ci, le trou de passage de barre de renfort ayant un diamètre prédéfini par lequel la barre de renfort (1) peut passer, l'unité anti-délogement (40) étant fixée à l'extrémité extérieure du capuchon de coupleur (10) pour empêcher le ressort de base (20a) d'être délogé dans la direction vers l'extrémité extérieure du capuchon de coupleur (10) dans un état dans lequel le ressort de base (20a) est intégré au capuchon de coupleur (10).

3. Coupleur de barres de renfort selon la revendication 2, le ressort de base (20a) ayant une portion arrondie (23) qui est usinée en arrondi le long de chaque coin de bords supérieurs des joints de telle manière que, lorsque le ressort de serrage (30) est déplacé dans la direction vers l'extrémité extérieure du capuchon de coupleur (10) le long du plan oblique incliné (22), un bord supérieur de chacun des joints (20a', 20a") chevauche une portion intérieure d'un bord inférieur d'un joint adjacent (20a', 20a") et un diamètre intérieur du ressort de base (20a) est diminué sous l'effet d'une force extérieure.

4. Coupleur de barres de renfort selon l'une quelconque des revendications 1 à 3, le ressort de serrage (30) ayant des plans obliques de serrage, qui correspondent aux plans obliques inclinés (22) de telle manière que le ressort de serrage (30) peut coulisser et se déplacer le long du plan oblique incliné (22), et une portion de coin coudé dont une partie s'enfonce dans la barre de renfort (1) lorsque le diamètre du ressort (30) est diminué.

5. Coupleur de barres de renfort selon l'une quelconque des revendications 1 à 3 comprenant de plus un moyen de connexion à une seule touche (50) qui empêche le ressort de serrage (30) d'interférer avec l'insertion de la barre de renfort (1) pendant que la barre de renfort (1) est en train d'être insérée dans le capuchon de coupleur (10) et fait en sorte que le ressort de serrage (30) maintient la barre de renfort (1) lorsque l'insertion de la barre de renfort (1) dans le capuchon coupleur (10) est terminée et dans lequel le moyen de connexion à une seule touche (50) comprend une portion de crochet (51) prévue adjacente à l'extrémité extérieure (30a) du capuchon de coupleur (10), la portion de crochet (51) supportant une extrémité (30a) du ressort de serrage (30), une plaque de support (52) prévue à l'intérieur du capuchon de coupleur (10) et un ressort à lames (53) supporté par la plaque de support (52), le ressort à lames (53) ayant une saillie (531) qui fait saillie à partir de la plaque de support (52) entre la portion de crochet (51) et le ressort à lames (53) de telle manière que l'autre extrémité (30b) du ressort de serrage (30) est supportée dans un état dans lequel le ressort de serrage (30) est tordu dans une direction dans laquelle le diamètre y est augmenté, cependant que, lorsque la barre de renfort (1) est insérée dans le capuchon de coupleur (10) et se presse contre la saillie (531), la saillie (531) est évidée, ceci étant dû à l'élasticité, et ne supporte plus l'autre extrémité (30b) du ressort de serrage (30) si bien que le diamètre du ressort de serrage (30) est rétabli, ceci étant dû à l'élasticité.
